# FASCICULE DE BREVET EUROPEEN

(11) **EP 1 730 932 B1**
(45) Date de publication et mention de la délivrance du brevet: **21.05.2008**
(21) Numéro de dépôt: 05739608.7
(22) Date de dépôt: 16.03.2005
(51) Int. Cl.: H04L 29/06

(54) **PROCEDE DE TRANSMISSION D"UN FICHIER DE DONNEES NUMERIQUES AU TRAVERS DE RESEAUX DE TELECOMMUNICATIONS**
VERFAHREN ZUM SENDEN EINER DIGITALEN DATEN-DATEI ÜBER TELEKOMMUNIKATIONSNETZE
METHOD FOR TRANSMITTING A DIGITAL DATA FILE VIA TELECOMMUNICATION NETWORKS

(30) Priorité: 29.03.2004 FR 0403226
(43) Date de publication de la demande: 13.12.2006
(73) Titulaire: Joliot, Philippe, 01110 Hauteville Lompnes (FR)
(72) Inventeur: Joliot, Philippe, 01110 Hauteville Lompnes (FR)
(74) Mandataire: Bratel, Gérard
(86) Numéro de dépôt international: PCT/FR2005/000635
(87) Numéro de publication internationale: WO 2005/107206

(56) Documents cités:
- EP-A- 0 948 176
- EP-A- 1 193 666
- WO-A-00/11870

## Description

La présente invention concerne un procédé de transmission sécurisée et confidentielle de données numériques au travers d'une architecture de réseaux multiples et indépendants de télécommunications ou de radiocommunications, qu'il s'agisse de données numériques statiques, c'est-à-dire enregistrées sur tout type de supports mémoires, ou dynamiques, c'est-à-dire non fixées sur de tels supports.

Il est généralement admis que le mode de communication entre deux points distants est un canal de transmission unique, dans lequel transite toute l'information selon un protocole de transmission tel que TCP/IP, IKE, IPsec, UDP, etc. Quel que soit le protocole choisi pour cette transmission, un bloc de données initial est acheminé dans sa totalité sous forme de paquets successifs au sein d'un canal unique. Par conséquent, l'information de ce bloc de données initial est accessible en totalité sur ce canal de transmission. Il n'existe donc pour une session de transmission de données entre deux points distants à un instant choisi qu'une unique convention de transmission "mono canal" supportée ensuite par un protocole quelconque. Ainsi, cette unicité de convention de transmission à l'instant choisi limite temporellement et physiquement la transmission.

Le document EP-A-1193666 divulgue un procédé de transmission sécurisée et confidentielle d'un fichier entre un expéditeur et un destinataire au travers de réseaux de télécommunication. Au niveau de l'expéditeur, le fichier initial est divisé en fragments qui sont recombinés avec un ordre modifié, pour leur transmission vers le destinataire, et réassemblés chez ce dernier. Toutefois, le document ne prévoit pas que l'expéditeur, après avoir fragmenté les données du fichier initial, leur attribue un chemin d'adressage prédéfini dans une clé de fragmentation-transmission, au sens de la présente invention.

Le document WO 00/11870 A divulgue un autre procédé de transmission sécurisée avec fragmentation de l'information initiale, compression des fragments et transmission dans un ordre modifié. Cependant, toute l'information reste ici transmise par le même canal.

Le document EP-A-0948176 prévoit lui aussi, pour la transmission d'un fichier entre un expéditeur et un destinataire, la fragmentation du fichier puis la transmission des fragments dans un ordre modifié, ici suivant des chemins différents. Toutefois, ce document ne contient pas la notion de clé de fragmentation-transmission au sens de la présente invention.

La présente invention vise à éviter ces inconvénients en fournissant un procédé de transmission sécurisée et confidentielle de données numériques au travers d'une architecture de réseaux multiples et indépendants de télécommunications ou de radiocommunications, dans lequel l'information initiale n'est pas accessible en totalité durant sa transmission, et permettant de choisir à un instant donné une convention de transmission parmi une multitude de conventions très largement supérieure au nombre que permettrait un simple hachage d'un bloc initial de données en sous-unités élémentaires adressées ensuite vers des relais de transmission intermédiaires, puis ré-acheminées vers un destinataire final.

A cet effet, l'invention a essentiellement pour objet un procédé de transmission sécurisée et confidentielle d'un fichier de données numériques entre un élément expéditeur et un élément destinataire au travers de réseaux de télécommunications ou de radiocommunications, dans lequel :
- l'élément expéditeur télédécharge d'une base de données répertoriant les éléments expéditeurs autorisés, une clé secrète symétrique de fragmentation-transmission ;
- l'élément expéditeur transmet la clé de fragmentation-transmission à l'élément destinataire par l'intermédiaire d'un relais dit de deuxième niveau ;
- le relais de deuxième niveau informe la base de données que la clé de fragmentation-transmission est en cours d'utilisation ;
- l'élément destinataire transmet à l'élément expéditeur une autorisation d'envoi des fragments par l'intermédiaire du relais de deuxième niveau ;
- l'élément expéditeur fragmente les données du fichier initial, selon une distribution incrémentale avant attribution par permutation, de sorte que les données de chaque fragment sont inintelligibles, le niveau de fragmentation et le type de fragmentation étant prédéfinis dans la clé de fragmentation-transmission ;
- l'élément expéditeur attribue à chaque fragment un chemin d'adressage, selon les instructions de la clé de fragmentation-transmission, au travers d'un réseau de relais dits de premier niveau ;
- l'élément expéditeur transmet chaque fragment à l'élément destinataire via les relais de premier niveau ;
- l'élément destinataire réassemble, d'après les instructions de la clé de fragmentation-transmission, les fragments reçus pour recréer le fichier de données initial ;
- l'élément destinataire envoie un accusé de réception et de contrôle du réassemblage du fichier initial à la base de données par l'intermédiaire du relais de deuxième niveau ;
- la clé de fragmentation-transmission est supprimée de la base de données.

Ainsi, l'idée inventive consiste à réaliser une dissémination multi-temporelle et multi-spatiale non orthodromique de toutes données préalablement fragmentées par l'élément l'expéditeur, la transmission des fragments créés dans une architecture de réseaux de relais multiples et indépendants, à destination d'un ou plusieurs éléments destinataires distants qui effectuent un ré-assemblage des éléments transmis, permettant la reconstitution des données initiales dans leur forme originale.

Il est avantageusement défini plusieurs classes différentes permettant de définir l'objet information initiale à transmettre, à savoir:
- une classe T de types de fragmentation du genre bits à bits, octets à octets, bloc d'octets à bloc d'octets, bloc de bits à bloc de bits, espace à espace (par exemple saut de caractère à saut de caractère, d'une harmonique de fréquence à la réapparition de la même harmonique de fréquence, d'un signal électromagnétique à la réapparition du même signal électromagnétique), et donc toutes les instances possibles et imaginables pour chacun des types précités ;
- une classe F de niveau de fragmentation, F étant un entier réel au moins égal à deux déterminé lors du choix de niveau de fragmentation ;
- une classe R de taille de réseaux, R étant un entier réel au moins égal à un, et de préférence supérieur ou égal à deux, déterminé lors du choix de la taille de l'architecture réseaux ;
- une classe A d'adresses IP des relais de l'architecture réseaux de types adresses IP des relais dits de premier niveau, adresses IP des relais dits de deuxième niveau, avec toutes les instances possibles et imaginables que l'on peut supposer.

Le principe de l'invention est ainsi d'implémenter dans un premier temps les caractéristiques suivantes:
- taille R d'une architecture de réseaux de R relais de premier niveau indépendants (à adresse IP différentes) fonctionnant en parallèle ;
- caractéristique d'un relais indépendant (à adresse IP unique) affecté uniquement à la transmission de la convention d'échange entre la source et la destination ;
- niveau F de fragmentation du message original par création de F fichiers dans lesquels les éléments constitutifs du message original sont distribués par permutation ;
ce dans un système de génération de clés symétriques toutes uniques dans leur représentation, et ne permettant la transmission que pour l'architecture réseaux ci-dessus décrite.

Puis les données de chacune de ces clés prises une à une (considérée comme une suite d'instructions) sont implémentées dans un programme logiciel de fragmentation et d'expédition chargé de générer à partir d'une information initiale, les éléments à transmettre. Enfin, les données de la clé unique sont implémentées après sa transmission dans l'architecture réseaux dans un programme logiciel de réception et d'assemblage, chargé de réaliser les instructions de la clé transmise , et d'obtenir à partir des éléments transmis et reçus l'information initiale , tout en ayant satisfait aux conditions de signature et d'authentification de la transmission.

Selon la taille de l'architecture réseaux de relais indépendants de premier niveau utilisée, le niveau de fragmentation et le type de fragmentation (par exemple bits à bits, octets à octets, bloc d'octets à bloc d'octets, bloc de bits à bloc de bits, espace à espace...) du bloc de données initiales originales avant transmission, il est ainsi possible de générer de fait une infinité théorique de clés de fragmentation-transmission pour un même bloc de données initiales originales entre deux entités distantes.

Dans un mode de réalisation préféré de l'invention, la clé de fragmentation-transmission est composée de deux sous-clés, dont :
- une sous-clé de fragmentation-réassemblage, unique pour chaque fichier de données initial à transmettre, et dont les possibilités de dénombrement sont issues du calcul factoriel, comprenant les instructions nécessaires à la déstructuration du fichier de données initial et à la distribution par permutation dans un jeu de fragments ;
- une sous-clé d'expédition, unique pour chaque fichier de données initial à transmettre, et dont les possibilités de dénombrement sont issues du calcul exponentiel, comprenant des instructions nécessaires, telles que les adresses IP des relais de premier niveau, à l'acheminement des fragments au sein du réseau de relais de premier niveau.

Selon une possibilité, l'élément destinataire adresse une requête aux relais de premier niveau, dont l'adresse IP est contenue dans la sous-clé d'expédition, pour télédécharger les fragments. La réalisation d'une session de transmission peut ainsi être différée dans le temps tant que l'architecture réseaux reste pérenne et le droit à l'utilisation de la clé de fragmentation-transmission valide, ce qui assure une fonction d'archivage confidentiel et physiquement sécurisé.

Chacun des relais dits de premier niveau est avantageusement pourvu de moyens de gestion de reconnaissance des fragments entrants, de tri intelligent et de ré-expédition des mêmes fragments vers leur destinataire.

Le relais de deuxième niveau n'est de préférence pas relié au réseau de relais de premier niveau. Il est cependant possible, par exemple, que le relais de deuxième niveau appartienne au réseau de relais de premier niveau.

Selon le degré de confidentialité souhaité, le réseau de relais de premier niveau peut être asservi au relais de deuxième niveau pour la définition de certaines tâches de réadressage.

Il est envisageable qu'un relais de premier ou de deuxième niveau soit remplacé par trois relais en ligne dont le relais intermédiaire est une adresse IP reliée aux deux autres relais par une connexion non Internet.

Dans son ensemble, le procédé selon l'invention est compatible avec tout type de cryptographie ou de compression intervenant en aval ou en amont.

L'invention prend donc dans son principe le contre-pied du préjugé actuellement admis selon lequel, pour communiquer une information entre deux points distants, ne peut être utilisée qu'une voie unique de communication qui achemine la totalité de l'information.

L'invention permet de créer une infinité de réseaux à fonctionnement de type Internet à accès autorisé, dans lesquels les informations sont échangées de façon sécurisée et confidentielle. Chaque réseau de cette infinité de réseaux a un accès autorisé à la session de transmission, la durée d'une session pouvant être limitée au traitement et à la transmission d'une information, ou préétablie conjointement par le fournisseur du procédé et l'utilisateur.

Les techniques actuelles de cryptologie font appel soit à des méthodes de cryptage dites asymétriques à clé publique et clé privée (par exemple DES, triple DES, RSA...) soit à des méthodes dites à clé symétrique secrète (regroupant stéganographie, technique de masquage, techniques de transformation-permutation...), qui présentent toutes, d'un point de vue cryptologique, la faille suivante : quelle que soit la puissance du moyen de crypte utilisé, l'information initiale originale est accessible dans sa totalité et sera donc totalement intelligible dès réussite de l'attaque cryptanalytique .

D'un point de vue cryptologique, le procédé selon l'invention élimine cette faille, l'information originale totale étant déstructurée avant sa transmission (ou sa sauvegarde sur support mémoire), et n'étant donc jamais accessible en totalité pendant sa transmission (ou sa sauvegarde). L'information totale originale ne sera réintelligible que si tous les fragments sont récupérés, ce qui est rendu quasiment impossible par la dissémination multi-temporelle et multi-spatiale, cette récupération de tous les fragments étant une condition indispensable avant tout essai de clé dans le cas d'une attaque cryptanalytique.

De toute façon, l'invention sera bien comprise à l'aide de la description qui suit, en référence au dessin schématique annexé représentant plusieurs modes de mise en oeuvre du procédé selon l'invention, sur lequel :
- la figure 1 est un schéma illustrant les architectures de réseaux employées ;
- la figure 2 est un schéma illustrant la structure d'une sous-clé de fragmentation-réassemblage ;
- la figure 3 est un schéma illustrant la structure d'une sous-clé d'expédition ;
- la figure 4 est un schéma illustrant la structure d'une clé de fragmentation-transmission ;
- la figure 5 illustre un exemple de session de transmission ;
- les figures 6A et 6B sont deux moitiés d'un même diagramme de collaboration illustrant les échanges des indices de clés CFT avant traitement d'un message total initial MTI dans une application particulière de l'invention.

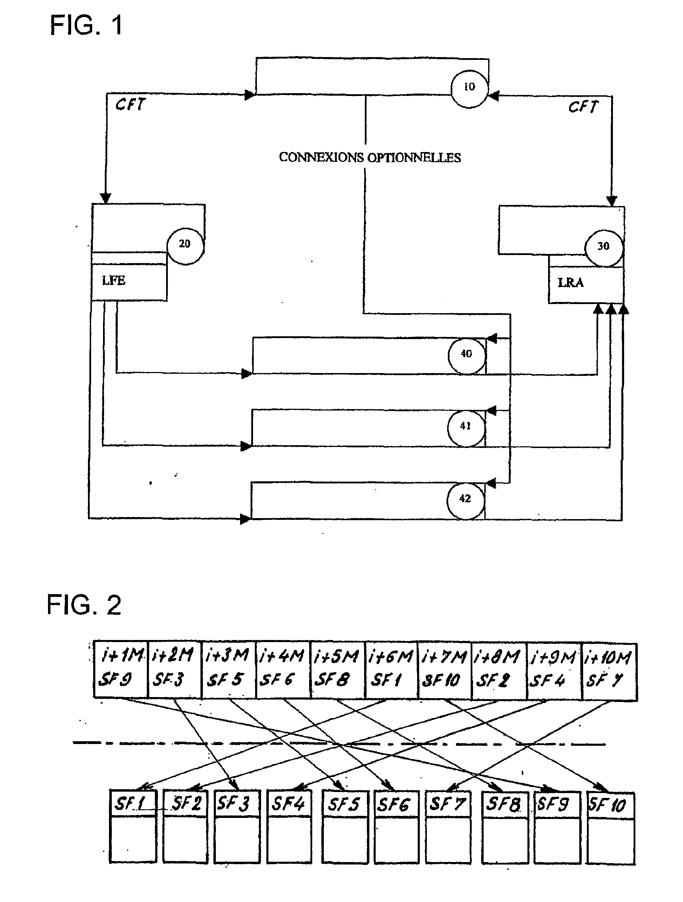

Comme l'indique le schéma de la figure 1, l'architecture réseaux est composée de deux réseaux parallèles indépendants.

Un premier réseau est constitué d'un relais 10, dit de "deuxième niveau", dont la fonction unique est d'assurer la transmission, entre un expéditeur 20 unique et un destinataire 30 distant, des seules données d'une clé de fragmentation-transmission, dit fichier CFT, et garantissant l'unicité d'autorisation de transmission de la clé CFT pré-choisie, échangée entre l'expéditeur et son destinataire.

Ce relais 10 de deuxième niveau est indépendant d'un réseau de R relais indépendants 40, 41, 42 à adresses IP pré-dédiées, dits de "premier niveau", dont la fonction unique est de transmettre uniquement entre l'expéditeur 20 et le destinataire 30 les fragments issus de la fragmentation et les données d'adressage propres à chacun de ces fragments. Chacun des R relais 40, 41, 42 de premier niveau est pourvu d'un logiciel de gestion de reconnaissance des fragments entrants, de tri intelligent et de ré-expédition des mêmes fragments vers leur destinataire 30 pré-défini.

Le fichier CFT est une clé secrète symétrique unique pour chaque transmission, pré-fournie au dispositif pour chaque bloc de données initial original traité. Il a une structure univoque à deux sous-clés, et sa taille totale est une variable sous dépendance de la taille R de l'architecture de réseaux choisie et du niveau F de fragmentation appliquée. -

Une première sous-clé A dite de fragmentation-réassemblage comprend toutes les instructions nécessaires à la déstructuration du fichier initial original et à sa distribution dans un jeu de F fragments. Les éléments issus de la destructuration du fichier initial original sont distribués dans ces fragments selon une loi de permutation dont les capacités sont issues des équations du calcul factoriel.

Une seconde sous-clé B dite d'expédition comprend toutes les instructions nécessaires à l'acheminement des F fragments au sein du réseau des relais de premier niveau.

Un logiciel de fragmentation et d'expédition LFE hébergé chez l'expéditeur 20 reçoit les instructions du fichier CFT pour réaliser d'une part la fragmentation du message original initial en F fragments, dont chacun a une taille environ F fois plus petite que la taille du message initial original traité. Par exemple, pour un message initial de 20 Ko et une fragmentation de niveau F = 100 en mode octet par octet, il y a 100 fragments de taille 200 octets ; de même pour un message initial original de très grande taille de 5 Gigaoctets et une fragmentation de taille 200, il y a 200 sous-fichiers d'une taille d'environ 25 Mo chacun.

Le logiciel LFE assure ensuite l'expédition de chacun des fragments selon les instructions de la sous-clé B, vers le destinataire 30, prédéfini par l'expéditeur 20, via le réseau de relais indépendants 40, 41, 42 de premier niveau, après avoir au préalable adressé au destinataire 30 prédéfini le fichier CFT, via le relais 10 de deuxième niveau, indépendant du réseau de relais de premier niveau. La distribution des F fragments au sein du réseau de relais 40, 41, 42 de premier niveau est régie par une combinaison des lois de permutation issues des équations du calcul factoriel et des lois de distribution des éléments d'un ensemble de F éléments dans un ensemble de R éléments. Chacun des F fragments n'est accompagné que de la partie d'adressage au sein de l'architecture réseaux le concernant.

Un logiciel de réception et d'assemblage dit LRA hébergé chez le destinataire reçoit les données du fichier CFT adressées via le relais 10 de deuxième niveau, instructions qui après comparaison avec la somme de certaines des données pertinentes acheminées avec les F fragments, permettront au logiciel LRA de réaliser le ré-assemblage des fragments arrivés au destinataire 30 via le réseau de relais 40, 41, 42 de premier niveau pour recréer le bloc de données initial original, selon les instructions du fichier CFT.

Le fichier CFT a une taille et un contenu définis par le paramètre R de taille de l'architecture réseaux et le niveau de fragmentation F choisi pour le procédé. En conséquence il y a lien d'interdépendance entre le fichier CFT et l'architecture de réseaux. L'ensemble des fichiers CFT d'un réseau n'a de fonction et d'existence que pour l'architecture de réseaux pour lequel il a été conçu et en conséquence la transmission d'un fichier traité par le logiciel de fragmentation LFE ne pourra se faire que par l'architecture de réseaux considérée et ne pourra aboutir à un destinataire 30 que parce que la transmission a été autorisée dans l'architecture de réseaux. L'existence du fichier CFT affecté à un fichier informatique empêche son télé-déchargement à un destinataire quelconque si la transmission n'a pas été autorisée dans l'architecture de réseaux considérée, et le ré-assemblage impossible si la transmission a été réalisée ailleurs que dans cette architecture réseaux.

Les fragments, les sous-clés A et B, le fichier CFT sont conformes avec tout type de protocoles de transmission existant.

Les valeurs possibles de R et de F pour un type T (variable au sein d'un ensemble de constantes de type de fragmentation, prédéfinie avant application de la méthode de fragmentation) prédéfini ne sont théoriquement limitées que par la taille du bloc de données initial original, et permettent une infinité théorique de conventions d'échanges au sein de l'architecture de réseaux entre l'expéditeur et le destinataire. Les lois mathématiques de dénombrement permettent de calculer le nombre de conventions d'échanges pour R et F fixés et T prédéfini comme étant égal à [(F!)².R^{F}].

Bien entendu, chaque fragment issu de la fragmentation d'un bloc de données peut être lui-même considéré comme un nouveau bloc de données original et subir à son tour une fragmentation supplémentaire.

Le nombre de conventions d'échanges différentes permis par le procédé, pour la transmission d'un fichier original entre un expéditeur et un destinataire, est de [(F!)².R^{F}] pour des valeurs élevées de R et de F.

Toutes les données créées peuvent supporter l'application d'une méthode de cryptage de type chiffrage asymétrique avec clé publique et clé privée.

Il est par exemple possible de définir un nombre N de clés CFT actives pour une période de temps D, permettant de rendre confidentielles toutes les transmissions d'un réseau wifi pendant la période D considérée.

Le procédé selon l'invention est mis en oeuvre comme suit.

Le logiciel LFE applique d'abord une fragmentation dite de niveau F au fichier original initial à transmettre, c'est-à-dire qu'il scinde les données du fichier initial original de façon incrémentale en n sous-unités élémentaires de taille prédéfinie par le type de fragmentation (espace à espace, bit à bit, octet à octet, bloc de bits à bloc de bits, ou bloc d'octets à bloc d'octets), pour créer ainsi F groupes de sous-unités élémentaires le plus équitablement réparties.

Un indice issu de la sous-clé de fragmentation-réassemblage, dont les possibilités de dénombrement sont issues du calcul factoriel, est associé à chaque groupe des sous-unités élémentaires suscitées.

Un chemin de transmission au sein d'une architecture de réseaux de R relais intermédiaires entre l'expéditeur et le destinataire est attribué à chacun des F fragments créés. Les possibilités de dénombrement issues de cette architecture sont celles du calcul exponentiel.

Le logiciel LRA réassemble les F fragments après leur réception chez le destinataire 30 selon les données pertinentes du fichier CFT déjà acquises.

Les figures 2 à 4 représentent la structure du fichier CFT.

Dans l'exemple de fragmentation de la figure 2, exemple donné à titre didactique pour un type de fragmentation espace par espace et un niveau de fragmentation de 10, la sous-clé A est composée d'un tableau d'entiers qui à chaque fragment SF (sous-fichier) associe respectivement le énième mot du fichier original.

Soit "i" l'incrément dans le fichier "ici du premier au dernier mot de la liste", i+1M SF9 est : le i^{ème} mot du texte va dans le sous-fichier SF9.

Ainsi, pour le texte suivant : "Les routeurs sont des dispositifs permettant de choisir le chemin que les datagrammes vont emprunter pour arriver à destination. Le routage est donc le processus qui consiste à définir le chemin que vont parcourir les données d'un ordinateur A jusqu'à un ordinateur B.", le fragment SF1 est "Les que routage chemin un" et le fragment SF3 est "sont datagrammes donc vont B."

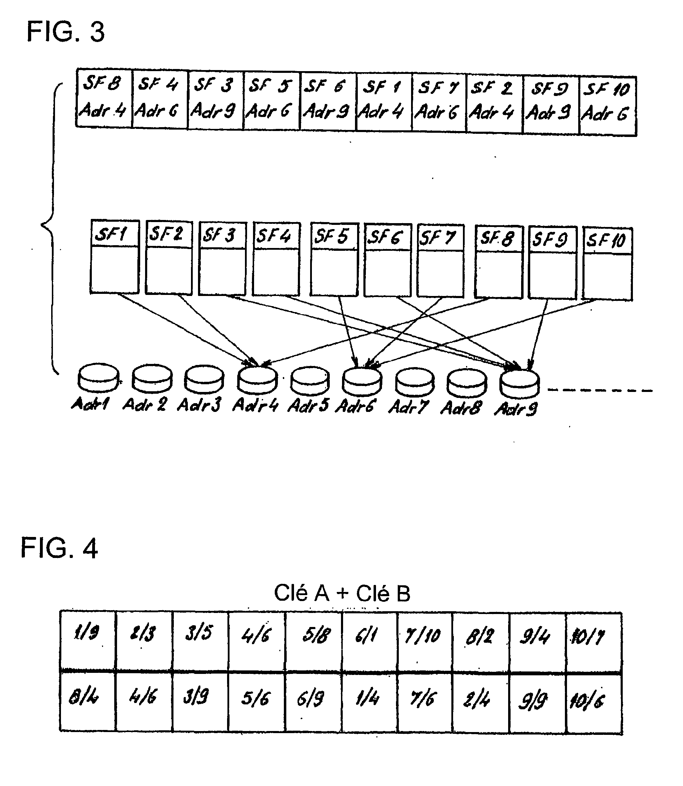

Dans l'exemple de structure de sous-clé B de la figure 3, Adr désigne l'adresse IP des relais de premier niveau 40, 41, 42. Ici, seuls sont utilisés les relais Adr4, Adr6 et Adr9.

L'exemple des figures 2 et 3 est repris en figure 4 pour représenter la structure du fichier CFT (sous-clé A + sous-clé B).

Ainsi, la lecture de cette clé CFT se fait de la façon suivante :
- pour la sous-clé A :
   Le (1^{er}, 11^{e}, 21^{e}, 31^{e}...) mot va dans le fragment SF9 ;
   Le (2^{e},12^{e}, 22^{e}, 32^{e} ...) mot va dans le fragment SF3 ;
   Le (3^{e},13^{e}, 23^{e}, 33^{e} ...) mot va dans le fragment SF5 ;
   Le (4^{e},14^{e}, 24^{e}, 34^{e} ...) mot va dans le fragment SF6 ;
   Le (5^{e},15^{e}, 25^{e}, 35^{e} ...) mot va dans le fragment SF8 ;
   Le (6^{e},16^{e}, 26^{e}, 36^{e} ...) mot va dans le fragment SF1 ;
   Le (7^{e},17^{e}, 27^{e}, 37^{e} ...) mot va dans le fragment SF10 ;
   Le (8^{e},18^{e}, 28^{e}, 38^{e} ...) mot va dans le fragment SF2 ;
   Le (9^{e},19^{e}, 29^{e}, 39^{e} ...) mot va dans le fragment SF4 ;
   Le (10^{e}, 20^{e}, 30^{e}, 40^{e} ...) mot va dans le fragment SF7.
- pour la sous-clé B :
   Les 1^{e}, 2^{e}, et 8^{e} fragments (SF8, SF1, SF2) passent par le relais dont l'adresse IP est la 4^{e} de la série ; les 4^{e}, 5^{e}, 7^{e} et 10^{e} fragments (SF4, SF5, SF7, SF10) passent par le relais dont l'adresse IP est la 6^{e} de la série ; les 3^{e}, 6^{e} et 9^{e} fragments (SF3, SF6, SF9) passent par le relais dont l'adresse IP est la 9^{e} de la série.

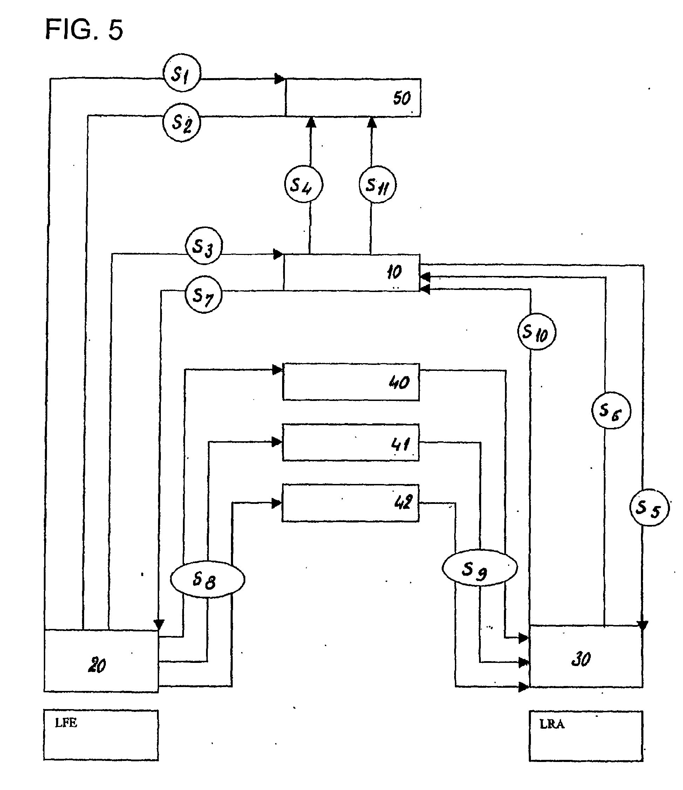

Le schéma de la figure 5 illustre un exemple de session de transmission, dont les étapes sont les suivantes.
- étape S1 : l'expéditeur 20 fait une demande d'attribution de clé CFT. S'il est déjà client répertorié dans la base de données 50 et possesseur d'un lot de clés réservées, sa demande est transmise à la base de données 50. S'il est déjà client mais non possesseur d'un lot de clés réservées, sa demande est traitée par des logiciels d'arrière guichet de site web (non représentés) avant d'être transmise à la base de données 50. Enfin, s'il n'est pas client, sa demande est traitée par les logiciels d'arrière guichet de site web avant d'être transmise à la base de données 50 (soit achat d'une clé, soit achat d'un lot de clés réservées). La demande est donc transmise à la base de données 50 qui extrait une clé CFT soit disponible à partir du lot de clés CFT réservées, soit disponible en dehors des lots de clés CFT réservées
- étape S2 : La clé CFT choisie par la base de données 50 est téléchargée vers le client expéditeur 20.
- étape S3 : La clé CFT est adressée par le logiciel LFE dans la trame CFT vers le relais 10 de deuxième niveau.
- étape S4 : Le relais 10 de deuxième niveau informe la base de données 50 que la clé CFT est en cours d'utilisation et ne doit donc plus être attribuée mais pas encore éliminée de la base de données 50.
- étape S5 : Le relais 10 de deuxième niveau tente de se connecter au destinataire 30 pour lui adresser la trame Email CFT.

Si le destinataire 30 est connecté, la trame Email CFT est reçue dans le logiciel LRA et un message d'autorisation d'envoi des trames fragments finalisées avec leur donnée pertinente d'adressage dans le réseau 40, 41, 42 est élaboré.

Si le destinataire 30 n'est pas connecté, la trame Email CFT reste dans le relais 10 de deuxième niveau et la procédure de transmission est suspendue. Le destinataire 30 devra venir chercher au relais 10 de deuxième niveau la trame Email CFT comme cela se fait actuellement pour un Email. Il faut cependant s'assurer que personne ne peut se substituer au destinataire 30 en vérifiant par exemple son adresse IP.
- étape S6 : Le message d'autorisation d'envoi des trames fragments est transmis au relais 10 de deuxième niveau qui est le seul à connaître l'adresse IP de l'expéditeur 20 de la trame CFT concernée.
- étape S7 : Le relais 10 de deuxième niveau adresse à l'expéditeur 20 le message d'autorisation d'envoi des trames fragments.

Si l'expéditeur 20 est connecté, le message d'autorisation d'envoi active l'expédition vers les relais 40, 41, 42 de premier niveau des fragments créés auparavant. Si l'expéditeur 20 n'est pas connecté, il reçoit un message lui demandant de se connecter, Il devra alors venir chercher le message d'autorisation d'envoi.
- étape S8 : Les trames fragments sont expédiées vers les relais 40, 41, 42 de premier niveau.
- étape S9 : Les trames fragments sont réexpédiées par les relais 40, 41, 42 de premier niveau vers le destinataire 30. Si le destinataire 30 est connecté, la procédure se poursuit.

Si le destinataire 30 n'est plus connecté, les relais 40, 41, 42 de premier niveau informent le destinataire 30 de se connecter et procédent à une nouvelle tentative de connexion puis d'expédition des trames fragments ; un nombre maximum de tentatives de connexion-expédition avec un temps maximum autorisé raisonnable est prédéterminé. En ce cas le destinataire 30 ne peut en aucun cas chercher les trames fragments qui lui sont destinées chez les relais de premier niveau 40, 41, 42.

Le logiciel de réception-assemblage LRA du destinataire 30 peut générer, à partir des données du fichier CFT, des « Email requêtes » avec comme adresses de destination les adresses IP des relais 40, 41, 42 de premier niveau contenues dans la sous-clé B du fichier CFT, permettant de récupérer au niveau de chaque relais 40, 41, 42 de premier niveau concerné, uniquement les trames fragments identifiées comme appartenant à la session de transmission du bloc de données initial original.
- étape S10 : Le destinataire 30 envoie au relais 10 de deuxième niveau un accusé de réception du type ICV "Integrity Check Value" (mot de contrôle) du message assemblé. L' ICV contenue dans la trame CFT (donc du message total initial) indique que l'assemblage est réussi.
- étape S11 : Cet accusé de réception valide donc la totalité de la session et est transmis à la base de données 50 pour sortir définitivement la clé CFT utilisée de la liste des clés CFT disponibles.

Les trois paramètres R (variable de taille de d'architecture réseaux de premier niveau), F (variable de niveau de fragmentation), T (variable au sein d'un ensemble de constantes de type de fragmentation, prédéfinie avant application de la méthode de fragmentation) sont indissociables entre eux, c'est-à-dire que l'existence de l'un entraîne l'existence des deux autres, mais ils peuvent prendre des valeurs différentes les uns des autres.

La conjugaison de ces trois paramètres définit la plate-forme des fonctions et des propriétés potentielles de l'application du procédé ci-dessus décrit. Les possibilités du choix de la valeur de chacun de ces trois paramètres permettent d'obtenir la prééminence de l'une ou plusieurs des fonctions et des propriétés potentielles de l'application du procédé, et donc de définir un ensemble de services de transmission aux propriétés principales notablement différentes et pré-orientées vers la fonction ou la propriété principale désirée. Il faut noter que la modulation par exemple du paramètre R, entier réel au moins égal à 2, est intéressante : plus R est bas pour F donné, moins le coût de transmission est élevé ; plus R est grand pour F donné, plus le coût de transmission est grand, mais plus la sécurité et la confidentialité de transmission sont élevées.

L'ensemble de ces fonctions liées mais à lien de dépendance variable entre elles, coexistantes dès la mise en application du procédé peuvent se répartir en deux groupes.

Un premier groupe rassemble les fonctions systématiquement présentes et non modulées par la variation d'un des trois paramètres F, R et T. Ces fonctions sont :
- d'autoriser sur l'architecture du réseau uniquement les fragments créés par le procédé, et d'interdire l'acheminement sur le réseau et donc la réception chez un quelconque destinataire non reconnu et autorisé de toute autre donnée non traitée par le procédé ;
- d'assurer la protection des données enregistrées sur un support de stockage (par exemple CD, SACD, DVD, mémoire) et d'interdire la transmission et le télé-déchargement non autorisés dans un environnement adéquat ;
- de diminuer l'infectivité et la contagiosité de tout virus (sans pouvoir être exporté vers de multiples destinataires) à partir du moment où toute transmission sur l'architecture du réseau est rendue unique par l'attribution d'un fichier CFT unique, et que tout fichier potentiellement porteur d'un virus ne peut être infectant qu'après ré-assemblage et exécution ;
- de limiter l'ampleur du pollupostage ;
- d'assurer la non répudiation des données.

Un second groupe rassemble les fonctions systématiquement présentes mais dont la prééminence et la puissance peuvent être modulées par la variation de l'un ou plusieurs des paramètres F,R et T. Ces fonctions sont :
- d'assurer l'échange confidentialisé des données transmises après application du procédé ;
- d'assurer un moyen cryptologique puissant (théoriquement illimité) et de fait limité que par la taille du bloc de données initial à traiter ;
- de rendre possible la transmission de données sans limite théorique de taille autre que celle imposée par la taille physique du réseau et le niveau de fragmentation , sans augmenter significativement le temps de transmission ;
- de transmettre de façon cryptée tout type de données sans augmentation significative de taille des données initiales ;
- de sauvegarder et d'archiver de façon cryptée tout type de données.

Dans une application plus élaborée, le procédé selon l'invention permet à l'expéditeur ainsi qu'au destinataire de générer par leurs propres logiciels la même clé de fragmentation-transmission de manière à réaliser un cryptosystème hybride. Pour ce faire, le procédé de fragmentation-transmission s'applique deux fois lors de deux phases distinctes:
- une première phase, dite de préparation, au cours de laquelle les données pertinentes nécessaires à la phase suivante, dite phase de transaction, sont transmises, de façon sécurisée par le procédé de l'invention, à l'expéditeur et au destinataire;
- la deuxième phase dite de transaction au cours de laquelle les données du message total initial MTI sont transmises, de façon sécurisée par le procédé de l'invention, entre l'expéditeur et le destinataire distant.

Au cours de la phase de préparation s'échangent entre le relais de deuxième niveau et l'expéditeur:
- le moyen pour le logiciel de l'expéditeur de générer chez celui-ci une clé dite de préparation expéditeur
- les données pertinentes pour l'expéditeur lui permettant d'élaborer chez lui une clé dite de transaction sécurisée, ces données pertinentes étant cryptées par la clé de préparation expéditeur.

Au cours de la phase de préparation s'échangent entre le relais de deuxième niveau et le destinataire désigné par l'expéditeur:
- le moyen pour le logiciel du destinataire de générer chez ce dernier une clé dite de préparation destinataire
- les données pertinentes pour le destinataire lui permettant d'élaborer la même clé de transaction que celle utilisée par l'expéditeur, ces données pertinentes étant cryptées par la clé de préparation destinataire.

Au cours de la phase de transaction, s'échangent entre l'expéditeur et le destinataire les données du fichier de données initiales MTI, cryptées selon le procédé par la clé dite de transaction.

Le logiciel permettant de générer les clés d'instructions de fragmentation-transmission, logiciel supporté par le relais de deuxième niveau tel que décrit précédemment, se retrouve dans cette application, implanté aussi dans le logiciel de fragmentation-réassemblage des clients expéditeur et destinataire.

Ce générateur de clé permet de générer les instructions de la clé dont la taille est définie par:
- le niveau de fragmentation F ;
- la taille R de l'architecture réseau utilisée, donc le nombre de relais de premier niveau.

Le générateur est conçu pour générer à la demande n'importe quelle combinaison de clé allant de la première combinaison à la *µ* ième combinaison, où *µ* = (F!)².R^{F}.

L'objectif est de permettre à l'expéditeur ainsi qu'au destinataire de générer par leurs propres logiciels la même clé de fragmentation-transmission.

Chaque logiciel générateur de la clé de fragmentation-réassemblage-transmission est caractérisé avant utilisation par son dernier état d'activation, défini par les paramètres suivants :
- le niveau F de fragmentation ;
- la taille R de l'architecture réseau utilisée , c'est à dire le nombre et les adresses des relais de premier niveau utilisés au sein de l'architecture réseau ;
- la tare de décalage T du logiciel générateur de clé. Cette tare de décalage T est un nombre entier de grande valeur aléatoire. En réponse à une demande de génération d'une i ème clé, le logiciel générateur de clé génère en fait la T+i ème clé.

A chaque instant la base de données du relais de deuxième niveau connaît le dernier état d'activation du logiciel de chacun des clients autorisés avant toute fragmentation-transmission.

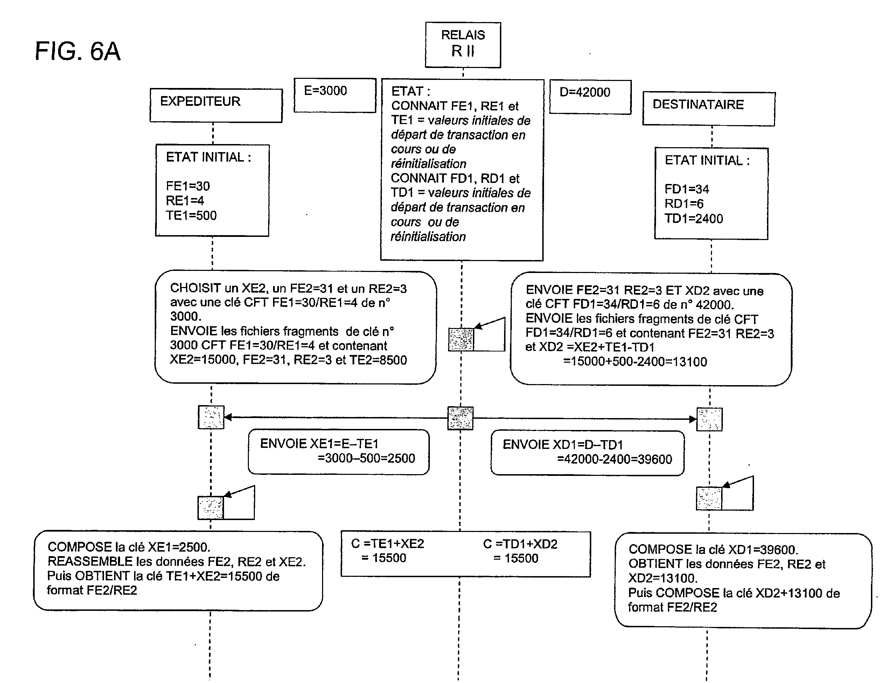

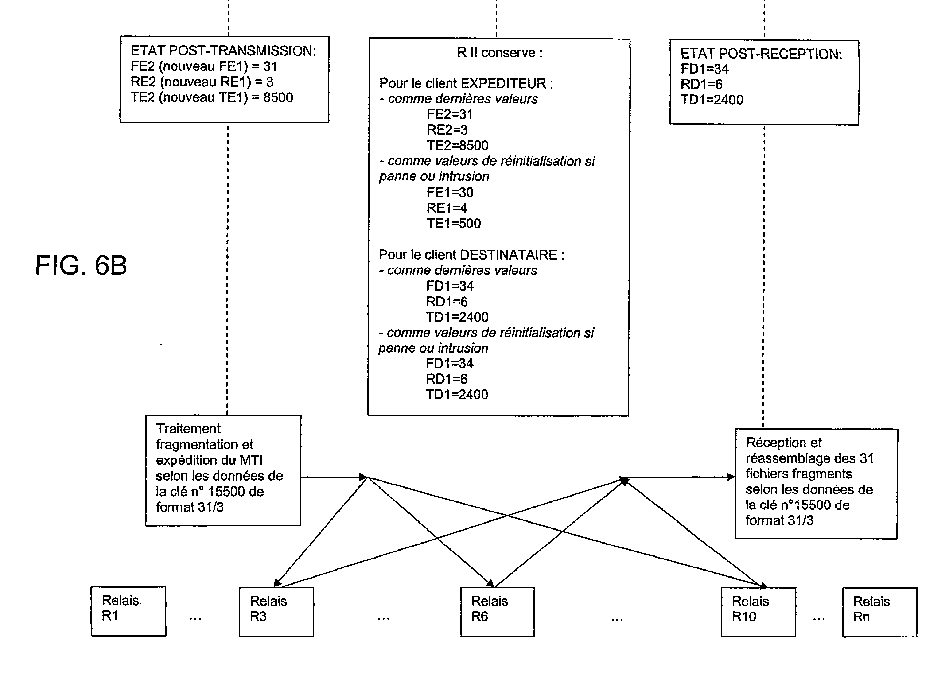

Cette application est illustrée sur les figures 6A et 6B avec des exemples numériques simples ; dans la pratique, on peut utiliser de très grands nombres entiers pouvant être codés sur 65536 octets.

Un client expéditeur souhaite effectuer un envoi sécurisé vers un destinataire. Il s'adresse au relais de deuxième niveau R II.

La base de données du relais de deuxième niveau R II :
1°) vérifie que le client expéditeur et le client destinataire sont enregistrés ;
2°) récupère le dernier état d'activation des logiciels du client expéditeur, à savoir FE, RE1 et TE1, et du client destinataire, à savoir FD1, RD1 et TD1 ;
3°) choisit de façon aléatoire:
   a) un grand nombre entier E pour générer la clé de préparation expéditeur au format FE1 RE1,
   b) un grand nombre entier D pour générer la clé de préparation destinataire au format FD1 RD1,
   c) une série de trois grands nombres entiers qui sont affectés aux variables FE2, XE2 et TE2,
   d) un nombre entier qui est affecté à la variable RE2 ;
4°) calcule la valeur XE1=E-TE1, qu'elle envoie en clair au client expéditeur afin qu'il puisse générer la clé de préparation expéditeur E pour procéder au réassemblage des instructions de transaction calculées par le relais de deuxième niveau et contenues dans le message crypté par cette clé de préparation expéditeur ; cette clé de préparation expéditeur est au format FE1 RE1 et au E ième rang du logiciel du relais de deuxième niveau et au XE1+TE1 ième rang du logiciel du client expéditeur ;
5°) calcule la valeur XD1=D-FD1, qu'elle envoie en clair au client destinataire afin qu'il puisse générer la clé de préparation destinataire D pour procéder au réassemblage des instructions de transaction calculées par le relais de deuxième niveau et contenues dans le message crypté par cette clé de préparation destinataire ; cette clé de préparation destinataire est au format FD1 RD1 et au D ième rang du logiciel du relais de deuxième niveau et au XD1+TD1 ième rang du logiciel du client destinataire ;
6°) calcule la valeur XD2=XE2-TD1 ;

Ensuite, le relais de deuxième niveau
7°) applique aux données XE2, FE2, RE2 et TE2, la fragmentation définie par la E ième clé de format FE1 RE1 de son générateur et transmet au client expéditeur les fichiers fragments constitués dans l'architecture réseau ;
8°) applique aux données XD2, FE2 et RE2, la fragmentation définie par la D ième clé de format FD1 R1 de son générateur et transmet au client destinataire les fichiers fragments constitués dans l'architecture réseau ;
9°) conserve dans sa base de données, comme valeurs du dernier état d'activation du logiciel client expéditeur, les valeurs FE2, RE2 et TE2, et comme valeurs de dernier état d'activation du logiciel du client destinataire, les valeurs FD1, RD1 et XD2.

Le logiciel client expéditeur reçoit successivement, en provenance du relais de deuxième niveau R II, la valeur XE1 puis les fichiers fragments cryptés par la clé de rang E de format FE1 et RE1.

La valeur XE1 permet au logiciel de générer la clé de réassemblage de format FE1 RE1 et de rang E, et ainsi d'obtenir les données pertinentes XE2, FE2, RE2 et TE2 qui vont être implémentées dans le logiciel pour générer la clé de fragmentation-transmission qui sera appliquée au fichier de données initiales MTI choisi pour être transmis au client destinataire.

Cette clé de fragmentation-transmission est de format FE2/RE2 de rang XE2 et constitue la clé de transaction. A ce stade, la fragmentation-transmission s'applique une dernière fois telle qu'expliquée précédemment selon le procédé de l'invention pour transmettre le fichier de données initiales MTI au destinataire au travers de l'architecture réseau.

Les données de la clé de transaction, à savoir le format de la clé de fragmentation-transmission (défini par les valeurs FE2 et RE2 ainsi que la valeur TE2 transmise dans le message crypté par la clé de préparation), deviennent pour le logiciel du client expéditeur ses nouvelles valeurs définissant son dernier état d'activation. Les valeurs de ce dernier état d'activation seront les valeurs initiales de la phase de préparation de la prochaine application du procédé décrit.

Du point de vue du client destinataire, son logiciel va recevoir successivement en provenance du relais de deuxième niveau R Il la valeur XD1 puis les fichiers fragments cryptés par la clé de rang D de format FD1/RD1.

La valeur XD1 va permettre au logiciel de générer la clé de réassemblage de format FD1/RD1 et de rang D, et ainsi d'obtenir les données pertinentes XD2, FE2, RE2 qui vont être implémentées dans le logiciel pour générer la clé de fragmentation-transmission qui sera appliquée au fichier de données initiales MTI choisi pour être transmis au client destinataire.

Cette clé de fragmentation-transmission est de format FE2/RE2 de rang XE2 et constitue la clé de transaction. A ce stade, le réassemblage des fichiers fragments transmis au travers de l'architecture réseau sera réalisé dès réception des fichiers fragments, et le fichier de données initiales MTI sera reconstitué chez le client destinataire. Les valeurs FD1, RD1 et XD2 sont conservées par le logiciel du client destinataire comme nouvelles valeurs définissant son dernier état d'activation. Les valeurs de ce dernier état d'activation, seront les valeurs initiales de la phase de préparation de la prochaine application du procédé décrit.

Il est possible de faire assurer les opérations suivantes par l'arrière-guichet de la base de données du relais de deuxième niveau:
- en cas d'échec d'une transaction, réinitialiser les codes d'activation du client expéditeur et du client destinataire aux dernières valeurs avant la transaction concernée, ou, au pire, aux premières valeurs d'initialisation implémentées lors de l'installation ;
- conserver, si nécessaire, en base de données, l'historique des valeurs des codes d'activation utilisés par chaque client ;
- procéder, depuis le relais de deuxième niveau, à l'implémentation de nouvelles valeurs d'activation chez tout client pour lequel il serait nécessaire, pour un motif de sécurité ou autre, de modifier les codes d'activation.

Comme il va de soi, l'invention ne se limite pas aux seuls modes de mise en oeuvre décrits ci-dessus à titre d'exemples ; elle en embrasse au contraire toutes les variantes de réalisation ou d'application. Ainsi, il est envisageable d'utiliser le procédé objet de la présente invention dans une application d'archivage et de sauvegarde sécurisée et confidentielle de données sur tout type de support mémoire (CD, SACD, DVD, SuperDVD, etc...).

## Revendications

1. - Procédé de transmission sécurisée et confidentielle d'un fichier de données numériques entre un élément expéditeur et un élément destinataire au travers de réseaux de télécommunications ou de radiocommunications, **caractérisé en ce que** :
- (étapes S1, S2) l'élément expéditeur (20) télédécharge d'une base de données (50) répertoriant les éléments expéditeurs autorisés, une clé (CFT) secrète symétrique de fragmentation-transmission ;
- (étapes S3, S5) l'élément expéditeur (20) transmet la clé de fragmentation-transmission (CFT) à l'élément destinataire (30) par l'intermédiaire d'un relais (10) dit de deuxième niveau :
- (étape S4) le relais (10) de deuxième niveau informe la base de données (50) que la clé de fragmentation-transmission (CFT) est en cours d'utilisation ;
- (étapes S6, S7) l'élément destinataire (20) transmet à l'élément expéditeur (30) une autorisation d'envoi des fragments par l'intermédiaire du relais (10) de deuxième niveau ;
- l'élément expéditeur (20) fragmente les données du fichier initial, selon une distribution incrémentale avant attribution par permutation, de sorte que les données de chaque fragment sont inintelligibles, le niveau et le type de fragmentation étant prédéfinis dans la clé de fragmentation-transmission ;
- l'élément expéditeur (20) attribue à chaque fragment un chemin d'adressage, selon les instructions de la clé de fragmentation-transmission (CFT), au travers d'un réseau de relais (40, 41, 42) dits de premier niveau;
- (étapes S8, S9) l'élément expéditeur (20) transmet chaque fragment à l'élément destinataire (30) via les relais (40, 41, 42) de premier niveau ;
- l'élément destinataire (30) réassemble, d'après les instructions de la clé de fragmentation-transmission (CFT), les fragments reçus pour recréer le fichier de données initial ;
- (étape S10) l'élément destinataire (30) envoie un accusé de réception et de contrôle du réassemblage du fichier initial à la base de données (50) par l'intermédiaire du relais (10) de deuxième niveau ;
- (étape S11) la clé de fragmentation-transmission (CFT) est supprimée de la base de données (50).

2. - Procédé selon la revendication 1, **caractérisé en ce qu'**il est défini plusieurs classes différentes permettant de définir l'objet information initiale à transmettre, à savoir:
- une classe T de types de fragmentation du genre bits à bits, octets à octets, bloc d'octets à bloc d'octets, bloc de bits à bloc de bits, espace à espace, et donc toutes instances possibles pour chacun des types précités ;
- une classe F de niveau de fragmentation, F étant un entier réel au moins égal à deux déterminé lors du choix de niveau de fragmentation ;
- une classe R de taille de réseaux, R étant un entier réel au moins égal à un, et de préférence supérieur ou égal à deux, déterminé lors du choix de la taille de l'architecture réseaux ;
- une classe A d'adresses IP des relais de l'architecture réseaux de types adresses IP des relais dits de premier niveau, adresses IP des relais dits de deuxième niveau, avec toutes instances possibles.

3. - Procédé selon la revendication 1 ou 2, **caractérisé en ce que** la clé de fragmentation-transmission (CFT) est composée de deux sous-clés, dont :
- une sous-clé (A) de fragmentation-réassemblage, unique pour chaque fichier de données initial à transmettre, et dont les possibilités de dénombrement sont issues du calcul factoriel, comprenant les instructions nécessaires à la destructuration du fichier de données initial et à la distribution par permutation dans un jeu de fragments ;
- une sous-clé (B) d'expédition, unique pour chaque fichier de données initial à transmettre, et dont les possibilités de dénombrement sont issues du calcul exponentiel, comprenant des instructions nécessaires, telles que les adresses IP des relais (40, 41, 42) de premier niveau, à l'acheminement des fragments au sein du réseau de relais (40, 41, 42) de premier niveau.

4. - Procédé selon la revendication 3, **caractérisé en ce que** l'élément destinataire (30) adresse une requête aux relais (40, 41, 42) de premier niveau, dont l'adresse IP est contenue dans la sous-clé (B) d'expédition, pour télédécharger les fragments.

5. - Procédé selon l'une des revendications 1 à 4, **caractérisé en ce que** chacun des relais (40, 41, 42) de premier niveau est pourvu de moyens de gestion de reconnaissance des fragments entrants, de tri intelligent et de ré-expédition des mêmes fragments vers leur destinataire (30).

6. - Procédé selon l'une des revendications 1 à 5, **caractérisé en ce que** le relais (10) de deuxième niveau n'est pas relié au réseau de relais (40, 41, 42) de premier niveau.

7. - Procédé selon l'une des revendications 1 à 5, **caractérisé en ce que** le réseau de relais (40, 41, 42) de premier niveau est asservi au relais (10) de deuxième niveau pour la définition de tâches de réadressage.

8. - Procédé selon l'une des revendications 1 à 7, **caractérisé en ce qu'**un relais de premier niveau (40, 41, 42) ou de deuxième (10) niveau est remplacé par trois relais en ligne dont le relais intermédiaire est une adresse IP reliée aux deux autres relais par une connexion non Internet.

## Claims

1. A secured and confidential method for transmitting a digital data file between a sending element and a receiving element via telecommunication or radiocommunication networks, **characterized in that**:
- (steps S1, S2) the sending element (20) downloads a database (50) listing the authorized sending elements, a symmetrical fragmentation-transmission secret key (CFT);
- (steps S3, S5) the sending element (20) transmits the fragmentation-transmission key (CFT) to the receiving element (30) via a so-called second-level relay (10);
- (step S4) the second-level relay (10) informs the database (50) that the fragmentation-transmission key (CFT) is being used;
- (steps S6, S7) the receiving element (20) transmits to the sending element (30) an authorization to send fragments via the second level relay (10) ;
- the sending element (20) fragments the data in the initial file, according to an incremental distribution before assignment by swapping, such that the data of each fragment is unintelligible, the level and the type of fragmentation being predefined in the fragmentation-transmission key;
- the sending element (20) assigns each fragment an addressing path, according to the instructions of the fragmentation-transmission key (CFT), through a so-called first-level network of relays (40, 41, 42);
- (steps S8, S9) the sending element (20) transmits each fragment to the receiving element (30) via the first-level relays (40, 41, 42);
- the receiving element (30) reassembles the fragments received, according to the instructions in the fragmentation-transmission key (CFT), to recreate the initial data file;
- (step S10) the receiving element (30) sends an acknowledgement of receipt and of checking of the reassembly of the initial file to the database (50) via the second-level relay (10);
- (step 11) the fragmentation-transmission key (CFT) is deleted from the database {50).

2. The method as claimed in claim 1, **characterized in that** there are defined several different classes for defining the initial information object to be transmitted, namely:
- a class T of fragmentation types of the bit-by-bit, byte-by-byte, byte block-by-byte block, bit block-by, bit block, space-by-space type, and therefore all possible instances for each of the abovementioned types;
- a fragmentation level class F, F being a real integer at least equal to two determined when choosing the fragmentation level;
- a network size class R, R being a real integer at least equal to one, and preferably greater than or equal to two, determined when choosing the size of the network architecture;
- a class A of IP addresses of the relays of the network architecture of the types of IP addresses of the so-called first-level relays, IP addresses of the so-called second-level relays, with all possible instances.

3. The method as claimed in claim 1 or 2, **characterized in that** the fragmentation-transmission key (CFT) comprises two subkeys, namely:
- a fragmentation-reassembly subkey (A), unique to each initial data file to be transmitted, and for which the counting possibilities are derived from the factorial computation, comprising the instructions needed for the deletion initial data file and the distribution by swapping in a set of fragments;
- a sending subkey (B), unique to each initial data file to be transmitted, and for which the counting possibilities are derived from the exponential computation, comprising instructions needed, such as the IP addresses of the first-level relays (40, 41, 42), for routing the fragments within the network of first-level relays (40, 41, 42).

4. The method as claimed in claim 3, **characterized in that** the receiving element (30) addresses a request to the first-level relays (40, 41, 42), the IP address of which is contained in the sending subkey (B), to download the fragments.

5. The method as claimed in one of claims 1 to 4, **characterized in that** each of the first-level relays (40, 41, 42), is provided with management means for recognizing incoming fragments, intelligent sorting and forwarding the same fragments to their recipient (30).

6. The method as claimed in one of claims 1 to 5, **characterized in that** the second-level relay (10) is not linked to the network of first-level relays (40, 41, 42).

7. The method as claimed in one of claims 1 to 5, **characterized in that** the network of first-level relays (40, 41, 42) is dependent on the second-level relay (10) for the definition of readdressing tasks.

8. The method as claimed in one of claims 1 to 7, **characterized in that** a first-level relay (40, 41, 42) or second-level relay (10) is replaced by three in-line relays, the intermediate relay of which is an IP address linked to the other two relays via a non-Internet connection.

## Patentansprüche

1. Verfahren zum gesicherten und vertraulichen Übertragen einer Datei mit digitalen Daten zwischen einem Sendeelement und einem Zielelement über ein Telekommunikations- oder Funkkommunikationsnetz, **dadurch gekennzeichnet, dass**:
- (Schritte S1, S2) das Sendeelement (20) von einer Datenbank (50), in der die berechtigten Sendeelemente verzeichnet sind, einen symmetrischen geheimen Fragmentierungs-/Übertragungs-Schlüssel (CFT) hochlädt;
- (Schritte S3, S5) das Sendeelement (20) den Fragmentierungs-/Übertragungs-Schlüssel (CFT) über ein Relais (10) der so genannten zweiten Ebene zu dem Zielelement (30) überträgt;
- (Schritt S4) das Relais (10) der zweiten Ebene die Datenbank (50) darüber informiert, dass der Fragmentierungs-/Übertragungs-Schlüssel (CFT) momentan verwendet wird;
- (Schritte S6, S7) das Zielelement (20) zu dem Sendeelement (30) eine Berechtigung zum Schicken von Fragmenten über das Relais (10) der zweiten Ebene sendet;
- das Sendeelement (20) die Daten der anfänglichen Datei gemäß einer inkrementellen Verteilung vor Zuordnung durch Permutation fragmentiert, derart, dass die Daten jedes Fragments unverständlich sind, wobei die Ebene und der Typ der Fragmentierung in dem Fragmentierungs-/Übertragungs-Schlüssel im Voraus definiert sind;
- das Sendeelement (20) zu jedem Fragment einen Adressierungspfad gemäß den Befehlen des Fragmentierungs-/Übertragungs-Schlüssels (CFT) über ein Netz von Relais (40, 41, 42) der so genannten ersten Ebene hinzufügt;
- (Schritte S8, S9) das Sendeelement (20) jedes Fragment zu dem Ziel (30) über die Relais (40, 41, 42) der ersten Ebene sendet;
- das Zielelement (30) entsprechend den Befehlen des Fragmentierungs-/Übertragungs-Schlüssels (CFT) die empfangenen Fragmente wieder zusammenfügt, um wieder die anfängliche Datendatei zu erzeugen;
- (Schritt S10) das Zielelement (30) eine Bestätigung des Empfangs und der Steuerung der Wiederzusammenfügung der anfänglichen Datei zu der Datenbank (50) über das Relais (10) der zweiten Ebene schickt;
- (Schritt S11) der Fragmentierungs-/Übertragungs-Schlüssel (CFT) aus der Datenbank (50) entfernt wird.

2. Verfahren nach Anspruch 1, **dadurch gekennzeichnet, dass** mehrere verschiedene Klassen definiert sind, die ermöglichen, das zu übertragende anfängliche Informationsobjekt zu definieren, nämlich:
- eine Klasse T von Fragmentierungstypen der Art Bit für Bit, Byte für Byte, Byteblock für Byteblock, Bitblock für Bitblock, Raum für Raum und somit alle möglichen Instanzen für jeden der oben genannten Typen;
- eine Klasse F der Fragmentierungsebene, wobei F eine reelle ganze Zahl ist, die wenigstens gleich zwei ist und bei der Wahl der Fragmentierungsebene bestimmt wird;
- eine Klasse R der Größe der Netze, wobei R eine reelle ganze Zahl ist, die wenigstens gleich eins und vorzugsweise größer oder gleich zwei ist, die bei der Wahl der Größe der Architektur der Netze bestimmt wird;
- eine Klasse A von IP-Adressen der Relais der Architektur von Netzen des Typs mit IP-Adressen von Relais der so genannten ersten Ebene und mit IP-Adressen der Relais der so genannten zweiten Ebene, mit allen möglichen Instanzen.

3. Verfahren nach Anspruch 1 oder 2, **dadurch gekennzeichnet, dass** der Fragmentierungs-/Übertragungs-Schlüssel (CFT) aus zwei Unterschlüsseln zusammengesetzt ist, wovon:
- ein Unterschlüssel (A) zur Fragmentierung/Wiederzusammenfügung, der für jede zu übertragende anfängliche Datendatei eindeutig ist und dessen Aufzählungsmöglichkeiten aus der faktoriellen Rechnung stammen, die Befehle enthält, die für die Zerlegung der anfänglichen Datendatei und für die Zuordnung durch Permutation in einem Satz von Fragmenten notwendig sind; und
- ein Unterschlüssel (B) zum Senden, der für jede zu übertragende anfängliche Datendatei eindeutig ist und dessen Aufzählungsmöglichkeiten aus der Exponentialrechnung stammen, die Befehle wie etwa die IP-Adressen der Relais (40, 41, 42) der ersten Ebene, die für den Transport der Fragmente innerhalb des Netzes der Relais (40, 41, 42) der ersten Ebene notwendig sind, enthält.

4. Verfahren nach Anspruch 3, **dadurch gekennzeichnet, dass** das Zielelement (30) eine Anforderung an die Relais (40, 41, 42) der ersten Ebene richtet, deren IP-Adresse in dem Sende-Unterschlüssel (B) enthalten ist, um die Fragmente hochzuladen.

5. Verfahren nach einem der Ansprüche 1 bis 4, **dadurch gekennzeichnet, dass** jedes der Relais (40, 41, 42) der ersten Ebene mit Mitteln zum Steuern der Wiedererkennung eintretender Fragmente, der verständlichen Sortierung und des Weitersendens dieser Fragmente zu ihrem Ziel (30) versehen ist.

6. Verfahren nach einem der Ansprüche 1 bis 5, **dadurch gekennzeichnet, dass** das Relais (10) der zweiten Ebene nicht mit dem Netz von Relais (40, 41, 42) der ersten Ebene verbunden ist.

7. Verfahren nach einem der Ansprüche 1 bis 5, **dadurch gekennzeichnet, dass** das Netz von Relais (40, 41, 42) der ersten Ebene dem Relais (10) der zweiten Ebene für die Definition von Umadressierungsaufgaben unterstellt wird.

8. Verfahren nach einem der Ansprüche 1 bis 7, **dadurch gekennzeichnet, dass** ein Relais (40, 41, 42) der ersten Ebene oder ein Relais (10) der zweiten Ebene durch drei in einer Linie angeordnete Relais ersetzt wird, wovon das Zwischenrelais eine IP-Adresse ist, die mit den zwei anderen Relais über eine Nicht-Internet-Verbindung verbunden ist.
